Europäisches Patentamt

European Patent Office

Office européen des brevets

(11) Veröffentlichungsnummer: **0 264 045 B1**

(12) **EUROPÄISCHE PATENTSCHRIFT**

(45) Veröffentlichungstag der Patentschrift: **06.05.92**

(51) Int. Cl.⁵: **C01B 33/02**

(21) Anmeldenummer: **87114508.2**

(22) Anmeldetag: **05.10.87**

(54) **Verfahren zur Raffination von Silicum und derart gereinigtes Silicum.**

(30) Priorität: **15.10.86 DE 3635064**

(43) Veröffentlichungstag der Anmeldung:
**20.04.88 Patentblatt 88/16**

(45) Bekanntmachung des Hinweises auf die
Patenterteilung:
**06.05.92 Patentblatt 92/19**

(84) Benannte Vertragsstaaten:
**BE DE FR IT**

(56) Entgegenhaltungen:
DE-A- 3 405 613      DE-A- 3 504 723
FR-A- 1 230 158      US-A- 4 097 584
US-A- 4 172 883      US-A- 4 298 423

(73) Patentinhaber: **BAYER AG**

**W-5090 Leverkusen 1 Bayerwerk(DE)**

(72) Erfinder: **Schwirtlich, Ingo, Dr.**
**Hausweberstrasse 26**
**W-4150 Krefeld 1(DE)**
Erfinder: **Lange, Horst, Dr.**
**Breslauer Strasse 31**
**W-4150 Krefeld(DE)**
Erfinder: **Kannchen, Werner**
**Schumannstrasse 14**
**W-4100 Duisburg 46(DE)**

**Beschreibung**

Die vorliegende Erfindung betrifft ein Verfahren zur Raffination von Silicium durch Behandeln einer Silicium-Schmelze mit reaktiven Gasen sowie auf diese Weise gereinigtes Silicium.

Für den Einsatz in der Photovoltaik werden große Mengen preiswerten Siliciums benötigt. Die wichtigste Voraussetzung für die Einsetzbarkeit des Materials ist neben der Wirtschaftlichkeit die Erfüllung der Reinheitsanforderungen. Obwohl die zulässigen Restverunreinigungskonzentrationen in Solarsilicium deutlich oberhalb derer liegen dürfen, die für Silicium in der Halbleiterindustrie gefordert werden müssen, ist es zur Zeit nicht möglich, verunreinigtes Silicium in einem einfachen Schritt auf den gewünschten Reinheitsgrad zu veredeln. Die Ursache dafür ist in der Verschiedenheit der Verunreinigungselemente und deren Konzentrationen zu sehen. Es sind hier in erster Linie metallisches Verunreinigungen, vor allem Aluminium und Eisen, zu nennen. Jedoch wirken besonders auch Bor und Phosphor wegen ihres Dotierungscharakters besonders störend. Daneben stellt auch die Entfernung von Sauerstoff und Kohlenstoff ein besonderes Problem dar.

Metallische Verunreinigungen lassen sich zwar durch eine Behandlung des Siliciums mit Säuren entfernen, jedoch gelingt es mit dieser Methode nicht, die Restkonzentrationen auf die gewünschten niedrigen Werte unterhalb von 0,1 ppmg zu reduzieren.

Wie in der US-A 2 402 839 beschrieben ist, kann durch Vakuum-Behandlung der Schmelze ebenfalls eine Reinigungswirkung erzielt werden. Diese ist zur Entfernung schwerflüchtiger Verunreinigung wie Bor und Kohlenstoff jedoch nicht geeignet.

In der DE-A 3 504 723 dagegen wird in schmelzflüssigem Silicium, das im Lichtbogenofen aus einem aus Siliciumverbindungen und Kohlenstoff enthaltenen Möller gewonnen wurde, durch Wasserstoffbegasung der Kohlenstoff- und Sauerstoffgehalt reduziert.

Dieses Verfahren ist jedoch nicht in der Lage, Restgehalte an Metallen, Bor oder Phosphor zu entfernen.

Aus der FR-A-1 230 158, Beispiel 7, geht ein Verfahren zur Reinigung von Silicium hervor, bei dem ein Gasgemisch bestehend aus 50 % HCl, 40 % Argon und 10 % Wasserdampf in eine Siliciumschmelze eingeblasen wird. Dabei wird bei einer Ausgangsverunreinigungskonzentration von 0,9 % mit den angegebenen Maßnahmen eine Reinigung auf 0,23 % erreicht.

Aufgabe der vorliegenden Erfindung ist es daher, ein Verfahren zur Verfügung zu stellen, gemäß dem unreines Silicium unter wirtschaftlichen Gesichtspunkten auf eine Reinheitsstufe gebracht werden kann, die den Anforderungen in der Photovoltaik genügt.

Überraschenderweise wurde nun gefunden, daß diese Aufgabe durch eine einfache Behandlung von zu reinigendem geschmolzenen Silicium mit reaktiven Halogenverbindungen in Kombination mit Wasserdampf und Wasserstoff erreicht werden kann.

Gegenstand der vorliegenden Erfindung ist somit ein Verfahren zur Raffination von Silicium durch Behandeln einer Silicium-Schmelze mit reaktiven Gasen, welches dadurch gekennzeichnet ist, daß die Schmelze gleichzeitig mit gasförmigen Halogenverbindungen, mit Wasserdampf und Wasserstoff in Kontakt gebracht wird.

Eine bevorzugte Ausführungsform des erfindungsgemäßen Verfahrens besteht darin, daß die Halogenverbindungen ein oder mehrere Halogensilane der allgemeinen Formel $Si_nX_{2n+2}$ sind, wobei n 1 bis 4 ist und X Halogen und/oder Wasserstoff bedeutet. Besonders bevorzugt ist dabei schon aus wirtschaftlichen Erwägungen die Ausführungsform, gemäß der die Halogenverbindung Siliciumtetrachlorid ist. Während der Durchführung des erfindungsgemäßen Verfahrens können als Reaktionsprodukte längerkettige Halogensilane sowie Verbindungen der Formel $Si_nX_{2n+2}$ entstehen, die bei Recyclisierung des unverbrauchten Gasgemisches zur weiteren Reinigungsbehandlung mit eingeblasen werden können. Sie bilden dadurch einen gewissen Anteil des reaktiven Gasgemisches.

Das erfindungsgemäße Verfahren kann aber auch mit Erfolg durchgeführt werden, wenn die Halogenverbindung Chlorwasserstoff ist.

Sowohl bei der Anwendung von Halogensilanen als auch von Chlorwasserstoff erweist es sich bei der Durchführung des erfindungsgemäßen Verfahrens als vorteilhaft, den reaktiven Gasen Inertgas zuzusetzen. Inertgase im Sinne dieser Erfindung sind solche, die unter den Reaktionsbedingungen keine Reaktion eingehen. Beispielhaft seien Argon und Helium genannt.

Das erfindungsgemäß verwendete Gasgemisch kann mit Hilfe eines Einleitrohres in die Schmelze eingeblasen werden. Es besteht aber auch die Möglichkeit, den Reaktionsraum oberhalb der Schmelzoberfläche mit diesem Gasgemisch zu füllen und somit über die Oberfläche der Schmelze die Raffination durchzuführen. Durch diese Verfahrensweise wird der Eintrag neuer Verunreinigungen durch die Begasungslanze vermieden. Eine andere Möglichkeit ist im Einleiten der Gase durch einen porösen Tiegelboden zu sehen.

Wichtig für ein Reinigungsverfahren von schmelzflüssigem Silicium ist es zu verhindern, daß Verunreinigungen aus dem Tiegelmaterial getragen werden. Materialien, die sich in diesem Punkt bewährt haben, sind hochdichte siliciumresistente Graphitqualitäten sowie nichtoxidische hochreine Keramiken wie Siliciumcarbid oder Siliciumnitrid.

Bei der oben beschrieben Raffination löst sich ein gewisser Anteil des Reaktionsgases in der Schmelze. Es empfiehlt sich daher, die Schmelze durch anschließendes Evakuieren des Gefäßes zu entgasen.

Bevorzugt geschieht dies dadurch, daß die Siliciumschmelze anschließend durch eine Vakuumbehandlung bei Drucken $\leq 10^{-1}$ mbar entgast wird.

Nachfolgend wird die Erfindung beispielhaft erläutert, ohne daß hierzu eine Einschränkung zu sehen ist.

Beispiel 1

In einem Quarzgefäß werden ca. 1 kg Siliciumpulver induktiv mit Hilfe eines Graphitsuszeptors unter einer Schutzgasatmosphäre aufgeschmolzen. Anschließend wurde die Temperatur der Schmelze auf 1450°C erhöht und eine Lanze von oben in den Tiegel eingeführt, die von einer aus 20 1/h Argon und 60 1/h Wasserstoff sowie 0,5 1/h Chlorwasserstoff und 0,7 1/h Wasserdampf bestehenden Gasmischung durchströmt wurde. Nach einer Behandlungszeit von 5 Stunden 30 Minuten wurde die Lanze herausgezogen und der Tiegel durch Absenken aus der Heizzone abgekühlt, so daß die Siliciumschmelze nach dem Bridgman-Verfahren gerichtet erstarrte. Aus dem Siliciumblock wurde eine Probe entnommen, die gebrochen und einer Säurebehandlung zur oberflächlichen Reinigung unterzogen wurde.

Die folgende Tabelle gibt die einzelnen Analysenwerte vor und nach der Behandlung wieder:

| (ppmg) | Al | B | Ba | C | Ca | Cr | Cu | Fe | Mg | P | Ti | Cl |
|---|---|---|---|---|---|---|---|---|---|---|---|---|
| vorher | 110 | 34 | <1 | 120 | 10 | <1 | <1 | 30 | 1,7 | 23 | <1 | 0 |
| nachher | 6 | 6,5 | <1 | 10 | 4 | <1 | <1 | <1 | <1 | 20 | <1 | <1 |

Wie aus den Analysen ersichtlich, wurde durch die Behandlung der Gehalt an Aluminium, Bor, Kohlenstoff, Calcium, Eisen und Magnesium deutlich reduziert.

Beispiel 2

Wie in Beispiel 1 wurden auch in diesem Experiment ca. 1 kg Siliciumpulver unter Schutzgas induktiv aufgeschmolzen. Bei ca. 1450°C wurde mit Hilfe einer Lanze ein Gasgemisch aus 60 1/h Wasserstoff, 30 1/h Siliciumtetrachlorid, 20 1/h Argon sowie 0,6 1/h Wasserdampf eingeblasen. Nach ebenfalls 5 Stunden und 30 Minuten wurde die Behandlung beendet und die Schmelze auf ca. $10^{-4}$ mbar evakuiert. Anschließend wurde sie durch eine gerichtete Erstarrung kristallisiert. In der Tabelle sind die Analysenwerte vor und nach der Behandlung aufgeführt. Dazu wurde die Probe gebrochen und durch eine Säurebehandlung oberflächlich gereinigt. Die Analysenwerte vor und nach dieser Behandlung gibt die nachfolgende Tabelle wieder:

| (ppmg) | Al | B | Ba | C | Ca | Cr | Cu | Fe | Mg | P | Ti | Cl |
|---|---|---|---|---|---|---|---|---|---|---|---|---|
| vorher | 110 | 13 | <1 | 120 | 10 | <1 | <1 | 30 | 1,7 | 30 | 23 | 0 |
| nachher | 2 | 1,8 | <1 | 23 | 3 | <1 | <1 | 1 | <1 | 5 | <1 | <1 |

Beispiel 3

Entsprechend Beispiel 1 und 2 wurde die Probe mit einer Mischung aus 20 1/h Wasserstoff, 200 1/h Wasserdampf und 2 1/h Argon sowie 0,5 1/h Siliciumtetrachlorid über fünfeinhalb Stunden begast. Es ergaben sich folgende Analysen:

3

| (ppmg) | Al | B | Ba | C | Ca | Cr | Cu | Fe | Mg | P | Ti | Cl |
|---|---|---|---|---|---|---|---|---|---|---|---|---|
| vorher | 110 | 13 | <1 | 120 | 10 | <1 | <1 | 30 | 1,7 | 30 | 23 | 0 |
| nachher | 22 | 6 | <1 | 27 | 5 | <1 | <1 | 2 | <1 | 24 | <1 | <1 |

Durch die Behandlung konnten ebenfalls die Konzentrationen an Bor, Kohlenstoff, Aluminium und Eisen verringert werden.

Beispiel 4

Entsprechend den Beispielen 1) bis 4) wurde in die Schmelze ein Gasgemisch aus 90 1/h Chlorwasserstoff, 60 1/h Wasserstoff, 4 1/h Wasserdampf und 0,5 1/h Argon über 5 Stunden und 30 Minuten eingeblasen. Nach der Probennahme, Zerkleinerung und oberflächlichen Reinigung ergab sich die folgende Reinigungswirkung

| (ppmg) | Al | B | Ba | C | Ca | Cr | Cu | Fe | Mg | P | Ti | Cl |
|---|---|---|---|---|---|---|---|---|---|---|---|---|
| vorher | 1500 | 0,6 | 0,1 | 103 | 3 | 0,7 | 33 | 31 | 0,5 | 0,3 | 9 | 0 |
| nachher | 2,5 | 0,6 | 0,1 | 73 | 1 | <0,1 | 0,5 | 0,4 | 0,5 | 0,3 | 0,1 | <1 |

Mit diesem Mischungsverhältnis wurde demnach eine besonders starke Verringerung der metallischen Elemente erreicht.

**Patentansprüche**

1.  Verfahren zur Raffination von Silicium durch Behandeln einer Silicium-Schmelze mit reaktiven Gasen, dadurch gekennzeichnet, daß die Schmelze gleichzeitig mit gasförmigen Halogenverbindungen, mit Wasserdampf und Wasserstoff in Kontakt gebracht wird.

2.  Verfahren gemäß Anspruch 1, dadurch gekennzeichnet, daß die Halogenverbindungen ein oder mehrere Halogensilane der allgemeinen Formel $Si_nX_{2n+2}$ sind, wobei n 1 bis 4 ist und X Halogen und/oder Wasserstoff bedeutet.

3.  Verfahren gemäß einem der Ansprüche 1 oder 2, dadurch gekennzeichnet, daß die Halogenverbindung Siliciumtetrachlorid ist.

4.  Verfahren gemäß Anspruch 1, dadurch gekennzeichnet, daS die Halogenverbindung Chlorwasserstoff ist.

5.  Verfahren gemäß einem oder mehrerer der Ansprüche 1 bis 4, dadurch gekennzeichnet, daß den reaktiven Gasen Inertgas zugesetzt wird.

6.  Verfahren gemäß einem oder mehrerer der Ansprüche 1 bis 5, dadurch gekennzeichnet, daß die SilicumSchmelze anschließend durch eine Vakuumbehandlung bei Drucken $\leq 10^{-1}$ mbar entgast wird.

**Claims**

1.  A process for refining silicon by treating a silicon melt with reactive gases, characterised in that the melt is simultaneously brought into contact with gaseous halogen compounds, with steam and hydrogen.

2.  A process according to claim 1, characterised in that the halogen compounds are one or more halogen silanes corresponding to the general formula $Si_nX_{2n+2}$, wherein n is 1 to 4 and X represents halogen and/or hydrogen.

3.  A process according to one of claims 1 or 2, characterised in that the halogen compound is silicon tetrachloride.

4. A process according to claim 1, characterised in that the halogen compound is hydrogen chloride.

5. A process according to one or more of claims 1 to 4, characterised in that inert gas is added to the reactive gases.

6. A process according to one or more of claims 1 to 5, characterised in that the silicon melt is subsequently degassed by a vacuum treatment at pressures $\leqq 10^{-1}$ mbar.

**Revendications**

1. Procédé d'affinage de silicium par traitement d'une masse fondue de silicium avec des gaz réactifs, caractérisé en ce que la masse fondue est en même temps mise en contact avec des composés halogénés gazeux, avec de la vapeur d'eau et avec de l'hydrogène.

2. Procédé suivant la revendication 1, caractérisé en ce que les composés halogénés consistent en un ou plusieurs halogénosilanes de formule générale $Si_nH_{2n+2}$, dans laquelle n a une valeur de 1 à 4 et X est un halogène et/ou de l'hydrogène.

3. Procédé suivant l'une des revendications 1 ou 2, caractérisé en ce que le composé halogéné est le tétrachlorure de silicium.

4. Procédé suivant la revendication 1, caractérisé en ce que le composé halogéné est le chlorure d'hydrogène.

5. Procédé suivant une ou plusieurs des revendications 1 à 4, caractérisé en ce qu'un gaz inerte est ajouté aux gaz réactifs.

6. Procédé suivant une ou plusieurs des revendications 1 à 5, caractérisé en ce que la masse fondue de silicium est ensuite dégazée par un traitement sous vide à des pressions inférieures ou égales à $10^{-1}$ mbar.